# EUROPÄISCHE PATENTSCHRIFT

(11) **EP 2 878 429 B1**
(45) Veröffentlichungstag und Bekanntmachung des Hinweises auf die Patenterteilung: **06.06.2018**
(21) Anmeldenummer: 14194841.4
(22) Anmeldetag: 26.11.2014
(51) Int. Cl.: B29C 65/02, B29C 65/10, B29C 65/14, B29C 65/16, B29C 63/06

(54) **Kunststoffformteil**
Plastic part
Pièce en plastique

(30) Priorität: 27.11.2013 DE 102013113133
(43) Veröffentlichungstag der Anmeldung: 03.06.2015
(73) Patentinhaber: egeplast international GmbH, 48268 Greven (DE)
(72) Erfinder: Späth, Dr., Thorsten, 48282 Emsdetten (DE)
(74) Vertreter: Fritz, Edmund Lothar

(56) Entgegenhaltungen:
- US-A- 3 873 391
- US-A- 5 776 293

## Beschreibung

Die vorliegende Erfindung betrifft ein Kunststoffformteil für den Rohrleitungsbau umfassend einen Formstückkern aus Kunststoff mit der Umrissgrundform des Kunststoffformteils, wobei dieser Formstückkern als gefertigtes Formstück durch Stumpfschweißen aus mindestens zwei Rohrhalbzeugen hergestellt wird, wobei mindestens zwei Rohrhalbzeuge jeweils Rohrleitungsabschnitte sind, deren jeweilige Achsen in dem Formstückkern einen Winkel miteinander einnehmen, sowie umfassend wenigstens eine den Formstückkern umgebende Verstärkungsschicht aus einem Kunststoffwerkstoff, welche die Druckbelastbarkeit des Kunststoffformteils erhöht.
Die vorliegende Erfindung bezieht sich insbesondere auf Kunststoffformteile, bei denen es sich um so genannte gefertigte Formstücke handelt, beispielsweise um Formstücke aus Polyethylen wie sie in der DIN EN 12201-3 Anhang B beschrieben sind. Dies sind Kunststoffformteile, die aus Rohrhalbzeugen im Stumpfschweißverfahren zusammengeschweißt werden. Aufgrund der Winkelschweißung gilt für Bögen ein Minderungsfaktor f_{B} von in der Regel 0,8 in Bezug auf den Betriebsdruck. Bei Segment-T-Stücken sind sogar Minderungsfaktoren von f_{T} = 0,6 notwendig.
Um diese Minderungsfaktoren zu kompensieren werden heute entweder dickere, überdimensionierte Rohrhalbzeuge verwendet, so dass trotz Berücksichtigung des Minderungsfaktors der notwendige Betriebsdruck von beispielsweise 10 oder 16 bar abgesichert werden kann, oder die Formteile werden von außen armiert. Stand der Technik sind hier beispielsweise Armierungen mit Glasfasern in Epoxidharzen, die außen um die Formteile gewickelt werden und dank der hohen Festigkeit der Glasfasern die Betriebsspannungen durch den Innendruck aufnehmen sollten. Nachteilig ist bei dieser bekannten Lösung allerdings, dass das als Matrix der Armierung verwendete Harz keinen Verbund mit dem innenliegenden Formteil (Formstückkern) eingeht, sondern wie eine Extra-Hülle nur das Formteil umschließt. Die übertragenen Schubkräfte sind daher oft nicht ausreichend, um Schäden im Betrieb durch wechselnde Lasten zu verhindern.
In der DE 94 21 501 U1 wird beschrieben, dass PE-Rohre sich zwar gut mittels Schweißmuffen verbinden lassen, diese aber für gasförmige Medien nur bei niedrigeren Drücken eingesetzt werden. Zur Verbindung von Rohren werden hier daher Rohrkörper aus einem faserarmierten Duroplasten, wie zum Beispiel glasfaserarmiertem Polyester, einem Innenliner aus einer äußeren Metallfolie und einer inneren Thermoplastfolie verwendet, die im Verbindungsbereich zunächst mit kunstharzgetränkten Faserbändern umwickelt werden, worauf dann noch eine Thermoplastfolie gewickelt wird, so dass anschließend ein elektrisches Verschweißen erfolgen kann.
In der DE 28 13 599 A1 sind faserverstärkte Kunststoffrohrteile wie zum Beispiel Rohrmuffen oder T-Stücke beschrieben, die einen äußeren rohrförmigen Körper aus Kunstharz aufweisen, der innen Verstärkungsschichten und eine glasfaserverstärkte Polyesterschicht oder Epoxyschicht aufweist.
Die DE 26 45 173 A1 beschreibt Kunststoffformteile für den Rohrleitungsbau mit den Merkmalen der eingangs genannten Gattung. Beschrieben werden Verbindungsstücke für Rohrleitungen in Form von Bögen, Abzweigungen etc., die aus einem massiven Kunststoffkern bestehen, der auf seiner Außenfläche von einer Hartschaumschicht umhüllt ist. Auf die Hartschaumschicht kann eine weitere Schicht aus einem massiven Kunststoff aufgebracht werden. Der Kern des Formstücks kann aus PVC oder einem glasfaserarmierten Polyesterharz bestehen. Zur Herstellung wird das aus einem massiven Kunststoffkern bestehende Formstück in eine Hohlform eingelegt und der verbleibende Hohlraum wird mit einem Hartschaumstoff ausgeschäumt. In dieser Schrift wird die Problematik erwähnt, dass die Formstücke, wenn sie aus einem Material bestehen, das dem Material der Rohrleitungen entspricht und daher gegen aggressive Medien beständig ist, nicht den geforderten Leitungsdrücken von Druckleitungen standhalten.

US5776293 A beschreibt Kunststoffformteile für den Rohrleitungsbau, die eine äußeren röhrenförmigen Körper aus Kunststoff, z.b. Polyethylen, aufweisen. Die vorgenannten bekannten Lösungen haben den Nachteil, dass Formstückkern und Verstärkungsschichten aus unterschiedlichen Werkstoffen bestehen, die sich nicht stoffschlüssig miteinander verbinden, so dass zwischen den einzelnen Werkstoffbereichen oder -schichten keine ausreichenden Schubkräfte übertragen werden.

In der DE 10 2009 010 396 A1 ist ein Verfahren zur Herstellung und Ummantelung von Kunststoffrohren oder Metallrohren beschrieben. Aus dieser Druckschrift ist es bekannt, zunächst einen zylindrischen Rohrkern aus Kunststoff durch kontinuierliche axiale Extrusion endlos herzustellen, dann den Rohrkern zu durchtrennen und auf das dadurch entstandene Rohrstück endlicher Länge ein Verstärkungsmaterial spiralförmig aufzuwickeln. Bei dem Verstärkungsmaterial kann es sich um ein Verstärkungsband aus einem Kunststoff mit gleicher oder ähnlicher chemischer Struktur handeln. Das flache Verstärkungsband kann aus einem orientierten Kunststoff bestehen und kann durch Verstrecken aus einem zuvor gewalzten Material erhalten werden. Das aus dieser Schrift bekannte Verfahren eignet sich jedoch nur zur Herstellung von geradlinigen verstärkten Rohrabschnitten, da der Rohrkern axial extrudiert wird und das Umwickeln erfolgt, indem der Rohrkern in Rotation um seine Achse versetzt wird, bei gleichzeitigem axialem Vorschub. Dieses Verfahren strebt die Herstellung von geradlinigen Rohren in einem kontinuierlichen Prozess an. Es ist nicht möglich, nach diesem Verfahren beispielsweise verstärkte Segmentbögen oder T-Stücke herzustellen.

Die Aufgabe der Erfindung besteht darin, ein Kunststoffformteil mit den Merkmalen der eingangs genannten Gattung zu schaffen, bei dem ein besserer Verbund zwischen dem Formstückkern und der diesen umgebenden Verstärkungsschicht erzielt wird, der eine höhere Schubkraftübertragung zulässt.

Die Lösung dieser Aufgabe liefert ein Kunststoffformteil der eingangs genannten Gattung mit den Merkmalen des Anspruchs 1 bzw. den Merkmalen des Anspruchs 2.

Gemäß einer ersten Variante der erfindungsgemäßen Lösung ist vorgesehen, dass der Formstückkern und die Verstärkungsschicht aus dem gleichen Kunststoffwerkstoff bestehen, wobei in den Kunststoffwerkstoff der Verstärkungsschicht Verstärkungsfasern eingebettet sind.

Gemäß einer zweiten alternativen Variante der erfindungsgemäßen Lösung ist vorgesehen, dass der Formstückkern und die Verstärkungsschicht aus dem gleichen Kunststoffwerkstoff bestehen, wobei der Kunststoffwerkstoff der Verstärkungsschicht aus einem durch Verstrecken hergestellten vorwiegend in einer Richtung orientierten Kunststoff besteht.

Es ist auch möglich, die in der erstgenannten und in der zweitgenannten oben genannten Variante der Erfindung genannten Merkmale miteinander zu kombinieren.

Die vorliegende Erfindung erstreckt sich nicht auf ausschließlich geradlinige Rohre oder Rohrstücke mit rein axialer Erstreckung und gleichbleibendem Durchmesser. Die Erfindung betrifft vielmehr Kunststoffformteile oder auch Formstücke genannt, die aus mindestens zwei Rohrleitungsabschnitten (Rohrhalbzeugen) bestehen, deren jeweilige Achsen in einem Winkel zueinander stehen. Dies sind insbesondere Segmentbögen, Segment-T-Stücke oder andere Winkelstücke, die aus zwei oder mehreren Rohrsegmenten zusammengesetzt sind oder auch beispielsweise Reduzierstücke.

Vorzugsweise ist es erfindungsgemäß so, dass sowohl der Formstückkern als auch die wenigstens eine Verstärkungsschicht jeweils aus einem thermoplastischen Kunststoff bestehen. Hier kommen im Prinzip im Rahmen der Erfindung die verschiedensten thermoplastischen Kunststoffe in Betracht. Beispielhaft, aber nicht einschränkend seien genannt Polyolefine oder Polyamide. Bevorzugt umfasst die wenigstens eine Verstärkungsschicht ein Polyethylen, ein Polypropylen, ein Polyamid oder ein Polyetheretherketon (PEEK).

Da Formstückkern und Verstärkungsschicht somit jeweils aus Kunststoffen mit grundsätzlich chemisch gleicher Konstitution bestehen, ergeben sich für das Kunststoffformteil insgesamt ein werkstoffhomogener Aufbau und eine stoffschlüssige Verbindung zwischen dem Formstückkern und der Verstärkungsschicht, die somit quasi eine mechanische Einheit bilden.

Bevorzugt wird die wenigstens eine Verstärkungsschicht hergestellt durch Umwickeln des Formstückkerns mit einer oder mehreren Lagen von Verstärkungsbändern aus einem Faserverbundwerkstoff oder einem durch Verstrecken orientierten Kunststoff. Der Faserverbundwerkstoff kann im Prinzip ohne besondere Einschränkung Verstärkungsfasern mit geeigneten Eigenschaften enthalten, wie sie dem Fachmann bekannt sind. Beispielhaft seien genannt Glasfasern, Aramidfasern, Polyamidfasern, Basaltfasern oder Kohlefasern, die in den thermoplastischen Kunststoff der Verstärkungsschicht/Verstärkungsbänder in für die Erzielung der geforderten Druckfestigkeit ausreichender Anzahl, Länge und Faserstärke eingebettet werden.

Gemäß einer bevorzugten Weiterbildung der vorliegenden Erfindung können die Verstärkungsbänder der Verstärkungsschicht durch Verstrecken eine wenigstens etwa 10-fache Festigkeit aufweisen, im Vergleich zu einem nicht orientierten Kunststoff, der mit dem Kunststoff der Verstärkungsbänder identisch ist. Durch die deutlich höhere Festigkeit der Verstärkungsbänder können nicht nur die Verschwächungswerte kompensiert werden, sondern es wird auch eine Fertigung höherfester Formteile möglich, die im Hochdruckbereich von beispielsweise 16 bar oder mehr bei Transport gasförmiger Medien in den Rohrleitungen und 30 bar oder mehr im Falle des Transports flüssiger Medien in den Rohrleitungen eingesetzt werden können.

Die Verstärkungsbänder können um die jeweiligen Abschnitte des Formstückkerns gewickelt und beispielsweise durch Flammen oder auch elektromagnetische Wellen wie Laserlicht mit dem Formstückkern und auch untereinander verschweißt werden. Aufgrund der stoffschlüssigen Verbindung der armierten Verstärkungsbänder mit dem Formstückkernbauteil sind die auf diese Weise hergestellten Formteile deutlich duktiler und weniger anfällig bei schwankenden Betriebsdrücken (Druck und Temperatur). Derartige werkstoffhomogene verstärkte Formteile bieten erhöhte Betriebssicherheit und erschließen neuartige Anwendungen.

Eine Alternative zu den faserverstärkten Verstärkungsbändern bieten solche aus durch Verstrecken orientierten und somit verfestigten thermoplastischen Kunststoffen, wobei diese bevorzugt aus dem gleichen Kunststoff bestehen wie der Formstückkern. Diese weisen bevorzugt mindestens die etwa 10fache Festigkeit auf wie das unorientierte Gefüge des Formstückkerns.

Bei Verwendung der erfindungsgemäßen Formteile können projektierte Betriebsdrücke von z.B. 16 bar eingehalten werden, ohne dass es erforderlich ist, die Formteile aus Halbzeugen mit größerer Materialstärke zu fertigen (zu verschweißen.) Dies vereinfacht auch die Lagerhaltung, da somit nur Rohrhalbzeuge mit einer Standardmaterialstärke bevorratet werden müssen, die dann bei Bedarf individuell mit den genannten Verstärkungsbändern umwickelt werden können. Im Hochdruckbereich ermöglichen die erfindungsgemäßen Formteile die Komplettierung eines Systems von Hochdruckrohren, was insbesondere für den Transport korrosiver Medien in derartigen Hochdruckrohrleitungssystemen sehr vorteilhaft ist.

Kunststoffformteile gemäß der vorliegenden Erfindung können insbesondere Segmentbögen sein, umfassend wenigstens zwei, vorzugsweise wenigstens drei miteinander verbundene Rohrleitungsabschnitte, deren jeweilige Achsen einen stumpfen Winkel miteinander einnehmen. Bei einem derartigen Segmentbogen werden bevorzugt zunächst Rohrleitungsabschnitte des Formkerns durch Stumpfschweißen miteinander verbunden, so dass sie danach einen Formkern mit segmentförmigen Abschnitten in der Grundform des herzustellenden Segmentbogens bilden und danach erfolgt das Umwickeln dieses Formkerns mit den Bändern, die die Verstärkungsschicht bilden.

Kunststoffformteile gemäß der vorliegenden Erfindung können auch beispielsweise Segment-T-Stücke oder Segment-Winkelstücke sein, umfassend wenigstens zwei, vorzugsweise wenigstens drei miteinander verbundene jeweils geradlinige Rohrleitungsabschnitte, wobei die Achsen von wenigstens zwei Rohrleitungsabschnitten einen rechten Winkel miteinander einnehmen.

Ebenfalls umfasst von der vorliegenden Erfindung sind andere Formstücke beispielsweise für Abzweigungen, bei denen wenigstens zwei Rohrleitungsabschnitte des Formstücks in einem spitzen Winkel aufeinander stoßen. Weiterhin umfasst die vorliegende Erfindung Reduzierstücke, bei denen axial aneinandergrenzende Abschnitte mit unterschiedlichen Durchmessern miteinander verbunden sind. Diese Reduzierstücke werden verwendet in Bereichen, in denen sich der Querschnitt einer Rohrleitung reduziert. Auch bei diesen Reduzierstücken wird zunächst der Formkern durch miteinander Verschweißen von einzelnen Rohrhalbzeugen gefertigt.

Gegenstand der vorliegenden Erfindung ist weiterhin ein Verfahren zur Herstellung eines Kunststoffformteils der zuvor beschriebenen Art, welches dadurch gekennzeichnet ist, dass zunächst der Formstückkern als gefertigtes Formstück durch Stumpfschweißen aus mindestens zwei Rohrhalbzeugen hergestellt wird, die Rohrleitungsabschnitte sind, deren jeweilige Achsen in dem Formstückkern einen Winkel miteinander einnehmen, danach der Formstückkern mit mindestens eine Verstärkungsschicht bildenden Bändern umwickelt und diese Bänder dann mit dem Formstückkern und/oder untereinander mittels einer offenen Flamme oder durch elektromagnetische Strahlung, insbesondere Laserstrahlung, stoffschlüssig verschweißt werden.

Die in den Unteransprüchen genannten Merkmale betreffen bevorzugte Weiterbildungen der erfindungsgemäßen Aufgabenlösung. Weitere Vorteile der Erfindung ergeben sich aus der nachfolgenden Detailbeschreibung.

Nachfolgend wird die vorliegende Erfindung anhand von Ausführungsbeispielen unter Bezugnahme auf die beiliegenden Zeichnungen näher beschrieben.

Dabei zeigen:
Figur 1 eine Ansicht eines erfindungsgemäßen Kunststoffformteils, welches aus Rohrhalbzeugen im Stumpfschweißverfahren zusammen geschweißt wurde;
Figur 2 einen vergrößerten Querschnitt durch das Kunststoffformteil entlang der Schnittlinie II-II von Figur 1;
Figur 3 eine Draufsicht auf den Formstückkern eines Kunststoffformteils in Form eines T-Stücks gemäß einer alternativen Variante der vorliegenden Erfindung;
Figur 4 eine Draufsicht auf das Kunststoffformteil von Figur 3 nach dem teilweisen umwickeln mit Verstärkungsbändern.

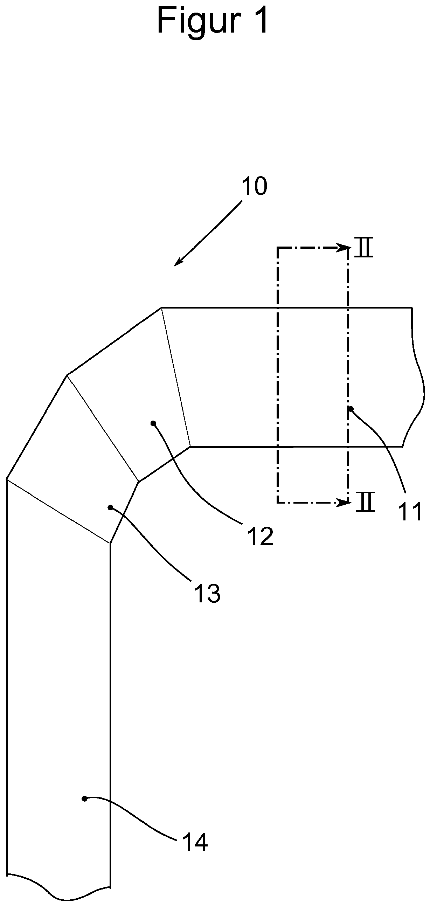

Zunächst wird auf Figur 1 Bezug genommen und anhand dieser wird ein erstes beispielhaftes erfindungsgemäßes Kunststoffformteil 10 erläutert. Es handelt es sich in dem Ausführungsbeispiel um einen Rohrbogen, der durch Stumpfschweißen hergestellt wurde aus einem ersten längeren geraden Rohrstück 11, an dessen eines Ende in einem Winkel von etwa 30 ° ein kürzeres, in der Draufsicht trapezförmiges erstes Winkelstück 12 angeschweißt wurde. An das andere Ende dieses ersten Winkelstücks 12 ist ein zweites Winkelstück 13, welches ebenfalls in der Draufsicht etwa trapezförmig ist, wiederum in einem Winkel von etwa 30 ° angesetzt und stumpf angeschweißt. An das andere Ende dieses zweiten Winkelstücks 13 ist wiederum in einem Winkel von etwa 30 ° ein zweites längeres gerades Rohrstück 14 angesetzt und stumpf angeschweißt. Dadurch ergibt sich ein aus den vier Rohrhalbzeugen 11, 12, 13, 14 durch Stumpfschweißen hergestelltes so genanntes gefertigtes Formstück, welches insgesamt einen 90 °-Bogen bildet und zum Beispiel dazu dient, zwei Rohrstränge in einem 90 ° Winkel miteinander zu verbinden.

Gemäß der vorliegenden Erfindung wird dieses Kunststoffformteil 10 aus einem Formstückkern hergestellt, der zunächst aus den genannten vier Rohrhalbzeugen geschweißt wird. Anschließend wird dann dieser Formstückkern mit ein oder mehreren Lagen aus Verstärkungsbändern umwickelt, bis die gewünschte Druckfestigkeit des endgültigen Formteils erreicht ist.

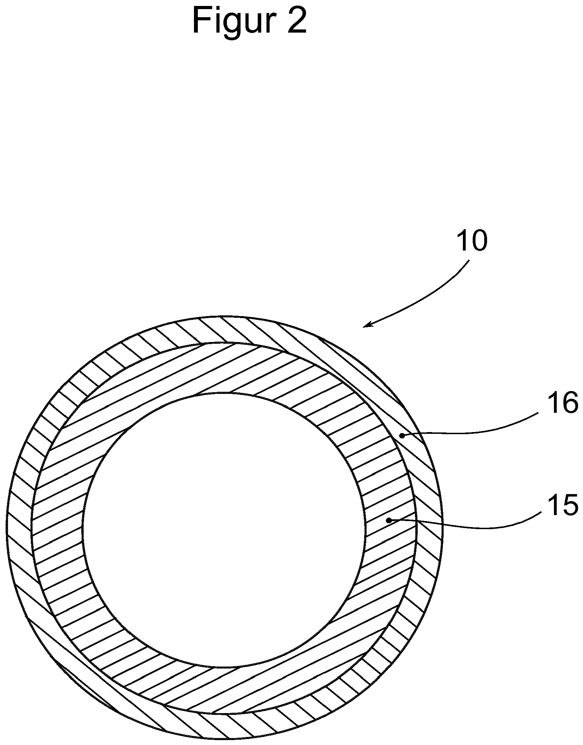

Figur 2 zeigt einen Querschnitt in vergrößertem Maßstab durch das durch Verstärkungsbänder umwickelte Kunststoffformteil 10 von Figur 1. Man erkennt hier den radial innen liegenden Formstückkern 15 im Bereich des geraden Rohrstücks 11 sowie die aus den Verstärkungsbändern 16 gebildete äußere Verstärkungsschicht, die mit dem Formstückkern 15 stoffschlüssig verbunden ist.

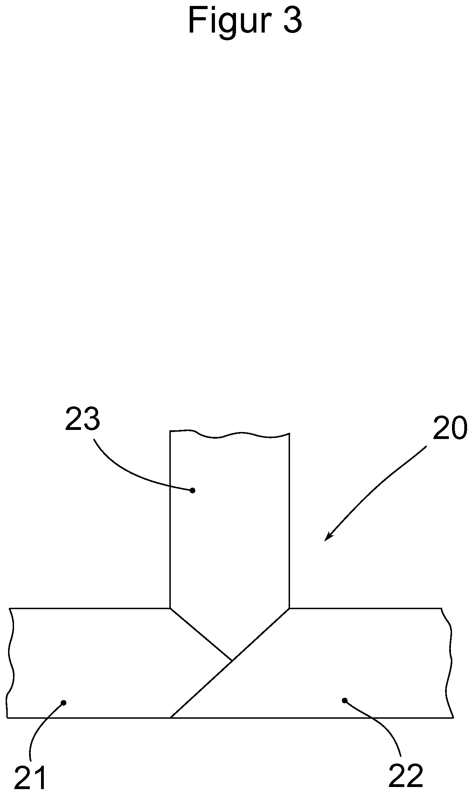

Figur 3 zeigt ein alternatives Ausführungsbeispiel der vorliegenden Erfindung, bei dem das verstärkte Kunststoffformteil 20 ein aus Segmenten zusammengesetztes T-Stück 20 ist. Dieses T-Stück 20 ist erfindungsgemäß ebenfalls ein gefertigtes Formstück im Sinne der eingangs genannten Norm DIN EN 12201-3. Grundsätzlich kann man derartige T-Stücke auch im Spritzguss herstellen, was jedoch nur üblich ist, wenn es sich um kleinere Dimensionen handelt. Da von derartigen T-Stücken mit kleineren Dimensionen in der Regel größere Stückzahlen benötigt werden, ist hier die Herstellung mittels Spritzgusstechnik rationell. Bei größeren Dimensionen und entsprechend geringen benötigten Stückzahlen, erfolgt jedoch die Herstellung solcher T-Stücke 20 und anderer Formteile, insbesondere Verbindungsstücke, Reduzierungstücke, Abzweigungen etc. für den Rohrleitungsbau, in Einzelfertigung, wobei die Formteile aus Halbzeugen zusammengeschweißt werden, weshalb man von gefertigten Formstücken spricht.

Ein T-Stück des in Figur 3 gezeigten Typs kann somit beispielsweise aus drei Rohrhalbzeugen geschweißt werden, nämlich einem ersten geraden Rohrstück 21, welches an seinem einen Ende vorn beidseitig spitzwinklig angeschnitten ist, einem zweiten geraden Rohrstück 22 (in der Zeichnung rechts), welches an seinem einen Ende vorn einseitig spitzwinklig schräg angeschnitten ist, wobei sich hier die Schräge über die gesamte Breite erstreckt und wobei dieses zweite gerade Rohrstück 22 mit dem ersten geraden Rohrstück 21 fluchtet und die schräg angeschnittenen Enden jeweils miteinander verschweißt sind. Schließlich wird ein drittes gerades Rohrstück 23 angeschweißt, welches im rechten Winkel zu den beiden anderen Rohrstücken 21 und 22 ausgerichtet ist und welches an seinem vorderen Ende wiederum beidseitig spitzwinklig angeschnitten ist, so dass die Spitze des Anschnitts in der Achse des durch dieses Rohrstück 23 gebildeten Stutzens des T-Stücks 20 liegt. Das dritte gerade Rohrstück 23 hat somit an seinem vorderen, dem T-Kreuzungspunkt zugewandten beidseitig spitzwinklig angeschnittenen, Ende etwa die gleiche Form wie das erste Rohrstück 21, während das zweite gerade Rohrstück 22 nur einseitig spitzwinklig angeschnitten ist. Alle drei Rohrstücke 21, 22, 23 können durch Stumpfschweißen zu dem T-Stück 20 verbunden werden. Anschließend nach der Herstellung eines solchen Formstückkerns mit der Konfiguration gemäß Figur 3 wird dieser wiederum durch Verstärkungsbänder umwickelt, so dass sich ein Kunststoffformteil mit höherer Druckbelastbarkeit ergibt.

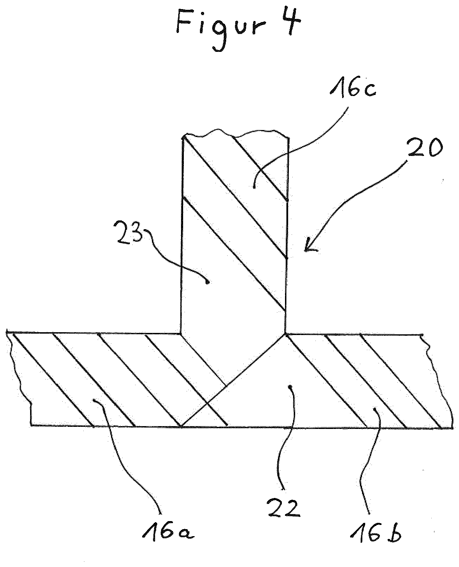

Der mit Verstärkungsbändern 16 umwickelte Zustand eines T-Stücks 20 gemäß Figur 3 ist in der Figur 4 dargestellt. Dort ist angedeutet, dass man diverse Verstärkungsbänder 16 a, 16 b, 16 c beispielsweise etwa spiralförmig um die einzelnen geraden Rohrabschnitte 21, 22, 23 des Formstückkerns des T-Stücks 20 in einem spitzen Winkel zur jeweiligen Achse des Rohrabschnitts wickeln kann.

### Bezugszeichenliste

- 10: Kunststoffformteil
- 11: gerades Rohrstück
- 12: erstes Winkelstück
- 13: zweites Winkelstück
- 14: gerades Rohrstück
- 15: Formstückkern
- 16: Verstärkungsbänder
- 16 a: Verstärkungsbänder
- 16 b: Verstärkungsbänder
- 16 c: Verstärkungsbänder
- 20: T-Stück
- 21: erstes gerades Rohrstück
- 22: zweites gerades Rohrstück
- 23: drittes gerades Rohrstück

## Patentansprüche

1. Kunststoffformteil (10, 20) für den Rohrleitungsbau umfassend einen Formstückkern aus Kunststoff mit der Umrissgrundform des Kunststoffformteils, wobei dieser Formstückkern als gefertigtes Formstück durch Stumpfschweißen aus mindestens zwei Rohrhalbzeugen hergestellt wird, wobei mindestens zwei Rohrhalbzeuge jeweils Rohrleitungsabschnitte sind, deren jeweilige Achsen in dem Formstückkern einen Winkel miteinander einnehmen, sowie umfassend wenigstens eine den Formstückkern umgebende Verstärkungsschicht aus einem Kunststoffwerkstoff, welche die Druckbelastbarkeit des Kunststoffformteils erhöht, wobei der Formstückkern (15) und die Verstärkungsschicht (16) aus dem gleichen Kunststoffwerkstoff bestehen, **dadurch gekennzeichnet, dass** in den Kunststoffwerkstoff der Verstärkungsschicht (16) Verstärkungsfasern eingebettet sind und dass die Verstärkungsschicht (16) hergestellt ist durch Umwickeln des Formstückkerns (15) mit einer oder mehreren Lagen von Verstärkungsbändern aus einem Faserverbundwerkstoff oder einem durch Verstrecken orientierten Kunststoff.

2. Kunststoffformteil (10,20) für den Rohrleitungsbau umfassend einen Formstückkern aus Kunststoff mit der Umrissgrundform des Kunststoffformteils, wobei dieser Formstückkern als gefertigtes Formstück durch Stumpfschweißen aus mindestens zwei Rohrhalbzeugen hergestellt wird, wobei mindestens zwei Rohrhalbzeuge jeweils Rohrleitungsabschnitte sind, deren jeweilige Achsen in dem Formstückkern einen Winkel miteinander einnehmen, sowie umfassend wenigstens eine den Formstückkern umgebende Verstärkungsschicht aus einem Kunststoffwerkstoff, welche die Druckbelastbarkeit des Kunststoffformteils erhöht, wobei der Formstückkern (15) und die Verstärkungsschicht (16) aus dem gleichen Kunststoffwerkstoff bestehen, **dadurch gekennzeichnet, dass** der Kunststoffwerkstoff der Verstärkungsschicht (16) aus einem durch Verstrecken hergestellten vorwiegend in einer Richtung orientierten Kunststoff besteht und dass die Verstärkungsschicht (16) hergestellt ist durch Umwickeln des Formstückkerns (15) mit einer oder mehreren Lagen von Verstärkungsbändern aus einem Faserverbundwerkstoff oder einem durch Verstrecken orientierten Kunststoff.

3. Kunststoffformteil nach einem der Ansprüche 1 bis 2, **dadurch gekennzeichnet, dass** sowohl der Formstückkern (15) als auch die wenigstens eine Verstärkungsschicht (16) aus einem Thermoplasten bestehen.

4. Kunststoffformteil nach einem der Ansprüche 1 bis 3, **dadurch gekennzeichnet, dass** sowohl der Formstückkern (15) als auch die wenigstens eine Verstärkungsschicht (16) aus einem Polyamid, einem Polyolefin, einem Polyethylen, einem Polypropylen oder einem Polyetheretherketon (PEEK) bestehen.

5. Kunststoffformteil nach einem der Ansprüche 1 bis 4, **dadurch gekennzeichnet, dass** die Verstärkungsschicht (16) aus einem Faserverbundwerkstoff besteht, welcher insbesondere Glasfasern, Aramidfasern, Basaltfasern, Polyamidfasern und/oder Kohlefasern umfasst.

6. Kunststoffformteil nach Anspruch 5, **dadurch gekennzeichnet, dass** die Verstärkungsbänder der Verstärkungsschicht (16) durch Verstrecken eine wenigstens etwa 10-fache Festigkeit aufweisen, im Vergleich zu einem nicht orientierten Kunststoff, der mit dem Kunststoff der Verstärkungsbänder identisch ist.

7. Kunststoffformteil nach einem der Ansprüche 1 bis 6, **dadurch gekennzeichnet, dass** die wenigstens eine Verstärkungsschicht (16), insbesondere die Verstärkungsschicht bildende Verstärkungsbänder mit dem Formstückkern (15) des Kunststoffformteils stoffschlüssig verschweißt sind.

8. Kunststoffformteil nach einem der Ansprüche 1 bis 7, **dadurch gekennzeichnet, dass** dieses ein Segmentbogen (10) ist, umfassend wenigstens zwei, vorzugsweise wenigstens drei miteinander verbundene Rohrleitungsabschnitte (11, 12, 13, 14), deren jeweilige Achsen einen stumpfen Winkel miteinander einnehmen.

9. Kunststoffformteil nach einem der Ansprüche 1 bis 7, **dadurch gekennzeichnet, dass** dieses ein Segment-T-Stück (20) oder ein Segment-Winkelstück ist, umfassend wenigstens zwei, vorzugsweise wenigstens drei miteinander verbundene jeweils geradlinige Rohrleitungsabschnitte (21, 22, 23), wobei die Achsen von wenigstens zwei Rohrleitungsabschnitten (22, 23) einen rechten Winkel miteinander einnehmen.

10. Verfahren zur Herstellung eines Kunststoffformteils nach einem der Ansprüche 1 bis 9, wobei zunächst der Formstückkern als gefertigtes Formstück durch Stumpfschweißen aus mindestens zwei Rohrhalbzeugen hergestellt wird, die Rohrleitungsabschnitte sind, deren jeweilige Achsen in dem Formstückkern einen Winkel miteinander einnehmen, danach der Formstückkern mit mindestens eine Verstärkungsschicht (16) bildenden Bändern umwickelt und diese Bänder dann mit dem Formstückkern und/oder untereinander mittels einer offenen Flamme oder durch elektromagnetische Strahlung, insbesondere Laserstrahlung, stoffschlüssig verschweißt werden.

## Claims

1. A plastic moulded part (10, 20) for pipeline construction comprising a moulded plastic core with the basic outline shape of the plastic moulded part, wherein this moulded core is manufactured as a finished moulding by butt-welding at least two semi-finished tubes, wherein at least two semi-finished tubes are each pipeline sections whose respective axes are at an angle to one another in the moulded core, as well as comprising at least one reinforcement layer made of a plastic material and surrounding the moulded core which increases the compressive strength of the plastic moulded part, wherein the moulded core (15) and the reinforcement layer (16) are made of the same plastic material, **characterised in that** reinforcement fibres are embedded in the plastic material of the reinforcement layer (16) and that the reinforcement layer (16) is produced by wrapping one or more layers of reinforcing bands around the moulded core (15), the reinforcing bands being made of a fibre composite material or a material oriented by stretching.

2. A plastic moulded part (10, 20) for pipeline construction comprising a moulded plastic core with the basic outline shape of the plastic moulded part, wherein this moulded core is manufactured as a finished moulding by butt-welding at least two semi-finished tubes, wherein at least two semi-finished tubes are each pipeline sections whose respective axes in the moulded core are at an angle to one another, as well as comprising at least one reinforcement layer made of a plastic material and surrounding the moulded core which increases the compressive strength of the plastic moulded part, wherein the moulded core (15) and the reinforcement layer (16) are made of the same plastic material, **characterised in that** the plastic material of the reinforcement layer (16) is made of a plastic manufactured by stretching and predominantly oriented in one direction and that the reinforcement layer (16) is produced by wrapping one or a number of layers of reinforcing bands around the moulded core (15), the reinforcing bands being made of a fibre composite material or a material oriented by stretching.

3. The plastic moulded part according to one of claims 1 to 2, **characterised in that** the moulded core (15) as well as the at least one reinforcement layer (16) are made from a thermoplastic.

4. The plastic moulded part according to one of claims 1 to 3, **characterised in that** the moulded core (15) as well as the at least one reinforcement layer (16) are mode from a polyamide, a polyolefin, a polyethylene, a polypropylene or a polyether ether ketone (PEEK).

5. The plastic moulded part according to one of claims 1 to 4, **characterised in that** the reinforcement layer (16) is made of a fibre composite material which in particular comprises glass fibres, aramid fibres, basalt fibres, polyamide fibres and/or carbon fibres.

6. The plastic moulded part according to claim 5, **characterised in that** the reinforcing bands of the reinforcement layer (16), by being stretched, have at least a 10-fold strength as compared with a non-oriented plastic material which is identical to the plastic of the reinforcing bands.

7. The plastic moulded part according to one of claims 1 to 6, **characterised in that** the at least one reinforcement layer (16), in particular the reinforcing bands forming the reinforcement layer, are integrally welded to the moulded core (15) of the plastic moulded part.

8. The plastic moulded part according to one of claims 1 to 7, **characterised in that** it is a segment arc (10) comprising at least two, preferably at least three connected pipeline sections (11, 12, 13, 14), whose respective axes are at an obtuse angle to one another.

9. The plastic moulded part according to one of claims 1 to 7, **characterised in that** it is a T-shaped segment (20) or an angled segment, comprising at least two, preferably at least three connected pipeline sections (21, 22, 23), each being linear, wherein the axes of at least two pipeline sections (22, 23) are at right angles to each other.

10. A method for manufacturing a plastic moulded part according to one of the claims 1 to 9, wherein firstly the moulded core is produced as a finished piece by butt-welding two semi-finished tubes which are pipeline sections, whose respective axes in the moulded core are at an angle to one another; whereupon the moulded cores are wrapped with bands forming at least one reinforcement layer (16); and then these bands are integrally welded with the moulded core and/or to one another by means of an open flame or by electromagnetic radiation, in particular laser radiation.

## Revendications

1. Pièce moulée en matière plastique (10,20)
pour la construction de conduites comprenant un noyau de pièce conformée en matière plastique avec la forme de base du contour de la pièce moulée en matière plastique , ce noyau de pièce conformée étant fabriqué en tant que pièce conformée finie par soudage bout à bout à partir d'au moins deux produits semi-finis tubulaires, au moins deux produits semi-finis tubulaires étant respectivement des tronçons de conduites, dont les axes respectifs dans le noyau de pièce conformée forment entre eux un angle, et comprenant au moins une couche de renfort dans un matériau plastique entourant le noyau de pièce conformée, laquelle augmente la résistance de charge à la pression de la pièce moulée en matière plastique , le noyau de pièce conformée (15) et la couche de renfort (16) étant composés du même matériau plastique, **caractérisée en ce que** dans la matière plastique de la couche de renfort (16) des fibres de renfort sont incorporées et **en ce que** la couche de renfort (16) est réalisée par enroulement du noyau de pièce conformée (15) avec une ou plusieurs couches de bandes de renfort d'un matériau composite à base de fibres ou d'une matière plastique orientée par étirage.

2. Pièce moulée en matière plastique (10,20) pour la construction de conduites comprenant un noyau de pièce conformée en matière plastique avec la forme de base du contour de la pièce moulée en matière plastique, ce noyau de pièce conformée étant fabriqué en tant que pièce conformée finie par soudage bout à bout à partir d'au moins deux produits semi-finis tubulaires, au moins deux produits semi-finis tubulaires étant respectivement des tronçons de conduites, dont les axes respectifs dans le noyau de pièce conformée forment entre eux un angle, et comprenant au moins une couche de renfort dans un matériau plastique entourant le noyau de pièce conformée, lequel augmente la résistance de charge à la pression de la pièce moulée en matière plastique , le noyau de pièce conformée (15) et la couche de renfort (16) étant composés du même matériau plastique, **caractérisée en ce que** le matériau plastique de la couche de renfort (16) est composée d'une matière plastique fabriquée par étirage orientée surtout dans une direction et **en ce que** la couche de renfort (16) est fabriquée par enroulement du noyau de pièce conformée (15) avec une ou plusieurs couches de bandes de renfort d'un matériau composite à base de fibres ou d'une matière plastique orientée par étirage.

3. Pièce moulée en matière plastique selon l'une quelconque des revendications 1 à 2, **caractérisée en ce que** tant le noyau de la pièce conformée (15) qu'au moins la couche de renfort (16) sont composées d'un thermoplastique.

4. Pièce moulée en matière plastique selon l'une quelconque des revendications 1 à 3, **caractérisée en ce que** tant le noyau de pièce conformée (15) qu'au moins une couche de renfort (16) sont composés d'un polyamide, d'une polyoléfine, d'un polyéthylène, d'un polypropylène ou d'un polyétheréthercétone (PEEC).

5. Pièce moulée en matière plastique selon l'une quelconque des revendications 1 à 4, **caractérisée en ce que** la couche de renfort (16) est composée d'un matériau composite à base de fibres, lequel comprend notamment des fibres de verre, des fibres d'aramide, des fibres de basalte, des fibres de polyamide et/ou des fibres de carbone.

6. Pièce moulée en matière plastique selon la revendication 5, **caractérisée en ce que** les bandes de renfort de la couche de renfort (16) comportent par étirage au moins une résistance multipliée par environ 10 en comparaison d'une matière plastique non orientée qui est identique à la matière plastique des bandes de renfort.

7. Pièce moulée en matière plastique selon l'une quelconque des revendications 1 à 6, **caractérisée en ce qu'**au moins une couche de renfort (16), notamment les bandes de renfort formant la couche de renfort sont soudées par conformité de matière au noyau de pièce conformée (15) de la pièce moulée en matière plastique.

8. Pièce moulée en matière plastique selon l'une quelconque des revendications 1 à 7, **caractérisée en ce que** celle-ci est un coude en segments rapportés (10), comprenant au moins deux, de préférence au moins trois tronçons de conduites (11,12,13,14) reliés entre eux, dont les axes respectifs forment entre eux un angle obtus.

9. Pièce moulée en matière plastique selon l'une quelconque des revendications 1 à 7, **caractérisée en ce que** celle-ci est une pièce en segments en T (20) ou une pièce angulaire à segments, comprenant au moins deux, de préférence au moins trois tronçons de conduites (21,22,23) reliés entre eux respectivement rectilignes, les axes d'au moins deux tronçons de conduites (22,23) formant entre eux un angle droit.

10. Procédé pour la fabrication d'une pièce moulée en matière plastique selon l'une quelconque des revendications 1 à 9, le noyau de pièce conformée étant d'abord fabriqué sous la forme d'une pièce conformée finie par soudage bout à bout à partir d'au moins deux produits semi-finis tubulaires, qui sont des tronçons de conduites, dont les axes respectifs forment entre eux un angle dans le noyau de pièce conformée, le noyau de pièce conformée étant enroulé par la suite avec des bandes formant au moins une couche de renfort (16) et ces bandes étant soudées ensuite par conformité de matière au noyau de pièce conformée et/ou entre elles au moyen d'une flamme nue ou par rayonnement électromagnétique, notamment un rayon laser.
